# EUROPEAN PATENT APPLICATION

(11) **EP 3 854 214 A1**
(43) Date of publication of application: **28.07.2021**
(21) Application number: 20201174.8
(22) Date of filing: 09.10.2020
(51) Int. Cl.: A21D 2/38, A21D 8/04, A23L 7/152

(54) **A METHOD FOR PRODUCING GRAIN MASS AND A SYSTEM FOR ITS PRODUCTION**

(30) Priority: 22.01.2020 EP 20153150
(71) Applicant: Ulmann, Jurgen, 50859 Köln (DE)
(72) Inventor: Ulmann, Jurgen, 50859 Köln (DE)
(74) Representative: Benatov, Samuil Gabriel

(57) **Abstract**

The invention belongs to food industries and namely to a method of grain mass production. The method features germinating cleaned grain using shungite water as a liquid medium and grinding germinated grain to particles sized no larger than 300 µm, while the dependence of the time of grain germination on the temperature of the liquid medium is inversely proportional. The invention belongs also to a system for grain mass production featuring isothermal chamber (13) for grain germination adapted to maintain constant temperature where are installed transport containers (7) for grain germination, a container (4) for infusing water with shungite stones (5) equipped with means (14) for supplying shungite water in the transport containers (7) and at least one grain grinder (17) which is capable of grinding germinated grain for obtaining a fine grain mass with particles not larger than 300 µm.

## Description

### Technical field

The invention belongs to the food industry and namely to the production of food products such as pasta products, bread, including bakery products such as hamburger buns, long or short baguettes, bread sticks, pitas (bannocks, including as a basis for pizza), biscuits, dry biscuits, croissants, cookies and so on from whole grain brought to the stage of germination, called "germinated grain".

### Previous technical level

As a result of research, it was determined: the nutritional biological value of the basis of a biological product, for example bread, is defined by the complex indices of protein, vitamins, microelements, dietary fiber and most importantly active enzymes which are activated at the time of germinating grain and the microdispergation of grain leads to reduction of gluten but increase of the quantity of enzymes, antioxidants, vitamins lowering gluten by 75% from the initial grain analysis.

The main problem impeding the vast use of germinated grain as the most valuable natural biological product as a basis in producing traditionally the most popular human food products such as bread and bakery products, pastas and such lies in the complicatedness of obtaining grain mass, firstly, with required properties, and, secondly, grain mass which on the one hand would make it possible to industrially manufacture such products and, on the other hand, would make it possible to avoid unpleasant sensation from rough food. The stable obtaining of the required properties of grain mass and the fine grinding of germinated grain by the traditional methods and by means of traditional equipment involve great difficulty which manifests particularly when producing end products in industrial quantities, that is 5-10 tons per day and more for bakery products and 50-100 tons and more per day for pasta products requiring clearly greater quantities of grain mass itself.

A method is known for producing grain mass lying in that cleaned grain is first soaked in water and then cleaned grain is ground until obtaining grain mass (USSR patent No. 1837778, MPK A 21 D 13/02, 1993).

A method is known for producing grain mass lying in that preliminarily cleaned grain with preserved germ is soaked in a water medium at the ration of at least 0.6 liter for 1 kg of grain for the time for obtaining acidity of the water medium of 2-12 degrees and the to the degree of swelling of grain characterized by its ability to be flattened with the germ jumping out undamaged and then the water medium in which grain was soaked is drained out and damp grain is ground while draining liquid fraction not connected with the obtained damp grain mass (RF patent 2134511, MPK A 21 D 13/02, 2/38, 1999).

A method is known for producing grain mass employing superficial cleaning of grain by running water, soaking grain for 18-24 hours at the temperature of water of 15-20°C, while changing water 3-6 times along mixing and scattering swollen grain by a layer not thicker than 5 cm and germinating it for 22-26 hours at the temperature of 18-25 °C, while rinsing and mixing grain at least four times and then ground to particles of 0.5-1.0 mm (RF patent 101959, 1998).

A shortcoming of the known set of equipment is that when used the ability to obtain grain mass with required properties is limited due to the imperfection of the equipment used.

A set of equipment is known for producing grain mass which features a module of superficial cleaning of grain made in the form of humidifier, huller and dampener installed between them while the latter is made in the form of a container with waterproof walls in which between the loading and unloading openings is placed a transporter with a driver (RF invention application No. 95107490, MGJ 6 B2B1/06, 1996).

A shortcoming of the known set of equipment is that when used the ability to obtain grain mass with required properties is limited due to the imperfection of the equipment used.

A method is known for producing grain mass employing a module of superficial grain cleaning made in the form of consecutively installed equipment for cleaning the surface of grain and a device for cleaning grain off mineral inclusions made in the form of hydrodynamic classifiers, lock containers, and a module of grain grinding made in the form of grain grinder installed in the line of the technological process (RF invention application No. 96105314, 1998).

A shortcoming of the known set of equipment is that when used the ability to obtain grain mass with required properties is limited due to the imperfection of the equipment used.

In terms of technical essence, the closest to the invention is the method of production of grain mass employing superficial cleaning of grain by running water, germinating grain and grinding it different in that for grain is used matured grain with seedcase and undamaged hyaline layer while before cleaning by running water grain is hulled with removing a part of the superficial layer of the fruit coat of grain at the rate of up to 5% of the initial mass of grain while preserving the integrity of the hyaline layer of the seedcase and the germination of grain is conducted in a liquid medium while supplying air to germinated grain until grain reaches humidity no less than 38%, acidity of the liquid medium pH amounting to 3.4 - 6.0 and before the commencement of the stage of intensive reduction of gluten and the grinding of germinated grain is conducted at a temperature not exceeding the temperature of protein denaturation of the obtained grain mass (RST application publication number WO0222268 A1, 2002 (prototype)).

In terms of technical essence, the closest to the invention is the set of equipment for the production of grain mass employing a module of superficial grain cleaning made in the form of equipment for cleaning the surface of grain and a device for cleaning grain from inclusions and a module of grain grinding made in the form of at least one grain grinder. In addition, the set of equipment is equipped with a module of grain germination made in the form of at least one container having a perforated diaphragm at the bottom and a draining tap for draining the liquid medium equipped with a system of air supply while the equipment of the grain surface cleaning of the superficial grain cleaning module features a hulling machine made with an ability of removing particles of the superficial layer of the fruit cover without damaging the hyaline layer of grain's seedcase and with preserving its germ, and a device for rinsing the grain surface while the grain grinder is made so as to allow fine grain mass with a temperature not exceeding the temperature of its protein's denaturation (RST application publication number WO0222268 A1, 2002 (prototype)).

### Summary of the invention

The invention solves the problem of developing a method and set of equipment for producing grain mass with achieving a complex technical result - obtaining grain mass from germinated grain in industrial quantities with stable from batch to batch required properties, with increased nutritional and biological value and high organoleptic indices of the end product produced from such grain mass.

The invention solves the problem of developing a method for producing grain mass enriched with minerals, microelements, vitamins, antioxidants, suitable for both small enterprises and on the industrial scale for any product made of dough with required parameters of dough and the product itself made of germinated grain: rye, wheat, barley, corn, oat, rice, buckwheat and other types of grain.

The obtained end products made of dough based on grain mass obtained by this method have increased nutritional and biological value, increased content of protein and natural balance of its aminoacidic composition, increased digestibility of the complex of vitamins and microelements most of which are in its bonded state in the germ and shell parts of the structure of grain and released when germinated, increased quantity of dietary fiber and its improved quality which is ensured by the biochemical processes of splitting and synthesizing the cells at the initial stage of germinating grain and activating the germ.

High organoleptic indices (high porosity, defect-free shape, pleasant taste and smell of the bread, golden appearance of crusts, elasticity of the crumb and so on) obtained from the grain mass of the end product are ensured by both the necessary residual quantity of gluten in germinated grain and the quality of the grain mass defined, inter alia, by the fineness of the grain mass.

A great problem is to ensure the required degree of fineness of the grain mass. The difficulty lies in that the obtained coarse particles of the grain mass cannot ensure the obtainment of high organoleptic indices of the end product as well as reduce the volume and sorbing properties of dietary fiber. In addition, the complexity of obtaining fine grain mass lies also in the fact that in the process of grinding using traditional grinders germinated grain heats to the temperature over 42°C which causes the denaturation of the grain mass's protein and caking of the grain mass which naturally prevents obtaining an end product from such grain mass with improved taste and high organoleptic indices.

Said technical result is achieved thanks to the fact that the method of producing the grain mass involving the germination of cleaned grain and its grinding, as grain is used matured grain with preserved seedcase and undamaged hyaline layer while the grain germination is conducted in a liquid medium at the temperature of 10°C to 38 °C based on water from 11 h to 38 h, depending on the temperature of liquid medium with constant air supply until reaching pH 3.6-7 in the grain. The dependence of the time of grain germination on the temperature of the liquid medium is inversely proportional. As a liquid medium is used water infused by shungite stones for 1 h to 10 days, preferably 24 to 48 h. After the germination of grain the water in which grain was germinated is drained and grain is rinsed with water at the temperature of 10 to 21 °C to prepare for milling. Then grain is ground to particles no larger that 300 µm and milling the germinated grain is conducted with simultaneous supply of cooled air and at the temperature of 22 °C to 35 °C, not exceeding the temperature of denaturation of the protein of the obtained grain mass.

It is preferable to germinate grain in containers with shungite stones.

The method may include also a stage of superficial cleaning of grain passing grain through an air tunnel at 90% humidity.

It is preferable to conduct milling to the size of particles not larger than 250 µm or not larger than 150 µm.

For germinating it is preferable to place grain in shungite-structured water with a rate of no more than 1.2 I for 1 kg of grain.

According to the invention, as grain are used grains of wheat, rye, oat, barley, soy, corn or their combinations at the required ratio of components. For this, the germination of grain of various cereals and their milling are conducted separately and the obtainment of grain mass from various cereals at the recipe-required ratio is conducted by blending the grain masses obtained from each cereal.

In the method of production of dough on the basis of grain mass obtained under the method according to the invention, as natural yeast is added oxidized mass with pH 5.8-6.2 of the same grain while the mass is oxidized naturally for 48 h to 72 h at the temperature of 25 °C to 35 °C.

Said technical result is achieved also thanks to the fact that the system for the production of grain mass comprising of:
- a module for germinating germ featuring:
- a loading device for loading cleaned grain to transport containers for germinating grain;
- at least one transport container for portional germinating of grain equipped with a means of supplying a liquid water-based medium, draining used water and a water supply system;
- at least one container for water infusion on the basis of shungite stones as a liquid medium equipped by a means of supply of shungite stone structured water in transport containers for grain germination;
- an isothermal chamber for grain germination in which are installed the transport containers while the chamber is capable to maintain the temperature of grain germination from 10 °C to 38 °C over the entire volume of each of the transport containers;
- unloading-loading device for transferring germinated grain from the transport containers to the grinder;
- a module of grain grinding made in the fashion of at least one grain grinder capable to grind germinated grain to achieve fine grain mass with particles sized no larger than 300 µm and has means for supplying cold air for cooling grain mass in the process of milling to the temperature not exceeding the temperature of protein denaturation.

According to the invention, the grain grinding module can feature two or more grinders situated consecutively while each subsequent one in the direction of production is capable of grinding the obtained mass to a smaller size of particles.

In its preferable version of the execution of the system the grinder consists of a container, at least one lowerable grid basket and at least two rotating levers in it ending with scraping knives touching the internal surfaces of the grid basket, a lifting device for lowering and lifting the grid basket and knives, while the rotating mechanism of the levers turns on an engine and the three-dimensional planetary gear box driven by a cog belt.

It is preferable that the transport container for the portional germination of grain to include a grid basket for grain identical with the grinder's grid basket.

It is preferable that the internal walls of the grain germination container be covered by nets with shungite stones 2 to 6 cm wide.

The system may feature a module for superficial grain cleaning.

For the germination is used matured cleaned grain with preserved seedcase and undamaged hyaline layer that is capable of germination. The germination of grain is conducted in conditions allowing to preserve a larger quantity of gluten. Thus, the criteria are defined whose observance allows to reliably model the natural process of germinating grain in interfacial conditions and regulate the ratio between the degree of increase the biological properties of grain caused by the activation of the germ following its placement in the appropriate medium and the degree of preservation of the grain's baking properties determined by the degree at which germinated grain preserves gluten.

The main distinct sign of the claimed method is the use of a liquid medium infused by shungite stones, a so-called "shungite water" as a liquid medium.

Shungite is a pre-Cambrian rock ranked by its composition and properties between anthracite and graphite. Shungite has a complex mineral composition including quartz, alumosilicates, carbon and can be used as a complex sorbent featuring simultaneously the properties of coal and silicates. This rock has also catalytic properties. The composition of shungite includes numeral microelements such as Na, Ca, K, Mg, Fe, S, Ni, Ti, V, Cu, As, Ce, W and others. The solid matter of shungite is a blend of various carbonic allotropes whose crystalline lattices are connected by amorphous carbon. It is characteristic of the carbon component of shungite to have various nanocarbon forms with relatively narrow channel with a diameter of around 1 nm, characteristic size of 10-15 nm and a great number of graphene-like layers: short and at the same time thick nanotubes as well as nano-onions, nano-cones, nano-beads (Zaidenberg A.Z., Rozhkova N.N., Kovatevsky V.V. et. al. Physical Chemical Model of Fullerene-like Shungite Rocks//Mol. Mat. 1996, v.8. p. 107). It was found that shungite contains fullerenes (Rozhkova, Natalia N.Role of Fullerene-like Structures in the Reactivity 10 of Shungite Carbon as Used in New Materials with Advanced Properties, in Perspectives of Fullerene Nanotechnology, ed. Eiji Osawa, pp 237-251, 2002 Springer). When immersed in water shungite gives away some carbon including fullerenes as well as other microelements.

The bactericide and antiseptic properties of shungite have been long known and used in purifying water, preparing solutions and other products. Shungite is used in these cases as a sorbent and/or biologically active additives (EA 201270503 A1, RU2116261C1, RU2464236C1, Efremova, S. V., Water Treatment with a Shungite Sorbent and Biosorbents on Its Base, Russ J Appl Chem (2006) 79: 397, 20 https://doi.org/10.1134/S1070427206030128). The bactericide effect of shungite is accounted for by its sorbing properties, influence of various nano-carbon structures, primarily fullerenes, nanotubes, change of pH et cetera. (N. N. Rozhkova, Role of Fullerene-like Structures in the Reactivity of Shungite Carbon as Used in New Materials with Advanced Properties. E. Osawa 25 (ed.) in Perspectives of Fullerene Nanotechnology, -Dordrecht-Boston-London: Kluwer Academic Pub. 2002, 237). Fullerenes are the most powerful antioxidants known to date. On the average they are 100-1000 times more effective than all currently known antioxidants. It is presumed that namely thanks to this they are capable of significantly extending the average life span of rats and round worms.

The various derivatives of fullerenes proved to be effective treating the human immunodeficiency: the protein responsible for the penetration of the virus into the blood cells - HIV-1-protease - has a spherical cavity of 10 A in diameter, whose form remains constant in all mutations. Such size almost corresponds with the diameter of the molecule of fullerene. A water-soluble fullerene derivative has been synthesized. It blocks the active center of HIV-protease without which a new virus particle formation is impossible (Baati, T., Bourasset, F., Gharbi, N., Njim, L., Abderrabba, M., Kerkeni, A., Szwarc, H. & Moussa, F. (2012). The prolongation of the lifespan of rats by repeated oral administration of [60] fullerene. Biomaterials, 33(19), 4936-4946; Simon H. 10 Friedman et al. Inhibition of the HIV-1 protease by fullerene derivatives: model building studies and experimental verification (English) //J. Am. Chem. Soc.. - 1993. - Vol. 115, no. 15. - P. 6506-6509;).

For the invention's objectives, the most suitable is the shungite with a content of carbon of 35% to 80%, preferably over 75%.

Shungite water is very pure, has a rich mineral composition and special informational-energetic field. In the interactions between shungite and water the latter acquires powerful antioxidant properties as the fullerenes transferring to water have a strong extensive antioxidant activity exceeding that of vitamins C and E. It is considered that shungite water has complex therapeutic properties for the human organism primarily because of the effect of fullerene on the cellular level which improves the cellular metabolism and functioning of the nervous system of the organism. A grain germinated on shungite water absorbs this water and while germination receives a rich complex of microelements, antioxidants, including fullerenes, which then enter the composition of the obtained mass and accordingly in the end product.

The end product obtained using the grain mass from germinated grain consists of 55% of germinated grain and 45% of shungite water and is characterized by increase content of the complex of vitamins of the group B, PP and others, microelements (zinc, potassium, iron and others) on the average by 20-40% compared to the traditional end product and the most important vitamin E contained at a high concentration in nature namely in a grain's germ - more than by 80%. The obtainment of grain mass with required properties in this invention is ensured, first, by obtaining really germinated grain, namely to the required stage of germination, characterized, on the one hand, by maximal increase of the germ's biological activity and the grain itself, and on the other hand, by preserving the properties and characteristic of grain (content of gluten, starch, protein) which provide for obtaining high organoleptic indices of the final product from the obtained germinated grain, and secondly, obtaining, over all the volume of the germinated grain subject to processing for one dough batch, a similar stage of biological activation of the grain in the process of germination which in turn ensures the stability of both required properties of grain mass from batch to batch and the whole batch of the end product made from that grain mass.

The fineness of the grain mass obtain upon grinding the germinated grain to the size of particle of not more than 0.3 mm, especially in a mode preventing heating the grain mass during grinding to the temperature causing the grain mass's protein denaturation and its caking, allows to obtain high organoleptic indices of the end product as well as increases the volume and sorbing properties of dietary fiber thanks to a great quantity of torn dietary fibers obtained in grinding grain mass. The use of the new design of the grain grinder allows to ensure the degree of fineness required by the technological process for the obtained grain mass and prevent its heating over 36 °C. This in turn allows to ensure the required properties of grain mass including preserving its protein component and thus increase the end product's organoleptic indices and in case of pasta product - just make their obtainment possible.

Thus a complex technical result is achieved - obtaining industrial quantities of grain mass from germinated grain with batch-to-batch stable required properties with increased nutritional and biological value and high organoleptic indices of the end product so made.

### Short description of drawings

More specifically the method of production of grain mass and the system for the production of grain mass according to the invention are explained by preferable versions of execution presented as examples not limiting the scope of the invention, with references on the attached drawings in which:
Figure 1 - a schematic depiction of the system for obtaining grain mass according to the invention.
Figure 2 - a general image of the transport container for grain germination (in section);
Figures 3 and 4 - a general image of the grain grinder (in section) with a lifted basket (figure 4) and lowered basket (figure 3);

### The best version of execution of the invention

The method of production of grain mass according to the invention features the germination of grain and its subsequent grinding. As grain is used cleaned mature grain with preserved seedcase and undamaged hyaline layer (capable of germination).

In addition, if necessary, the method can include the stage of germination and the stage of superficial cleaning grain and/or cleaning grain off mechanical inclusions. The methods of cleaning grain themselves are known. For example, the cleaning off the superficial layer can be conducted by humid blowing passing grain through an air tunnel at 90% humidity. Before cleaning by running water grain is subjected to hulling with removing a part of the superficial layer of grain's bran covering at the rate of 5% of the initial mass of grain preserving the integrity of the hyaline layer. The known method described in WO0222268 A1 can be applied.

Usable are grain of wheat of soft and hard kinds, rye, barley, dinkel wheat, einkorn (Triticum monococcum)), corn, oat, soy, rice, buckwheat and their mixes in proportions prescribed by recipe. The superficial cleaning and germination of various grains are conducted separately by parallel flows taking into account the specifics of activation of the germ of each of the components.

The grain germination is conducted in containers in a liquid medium while according to the invention as a liquid medium is used shungite stone-infused water. The infusion of water is conducted in separate containers where shungite stones are placed in the quantity of 5 to 50% of the weight of the water, preferably - 10% of the water weight. Water is infused for 1 h to 10 days, preferably 24 to 72 h, at the temperature of 10 to 80 °C.

As a liquid medium can be used liquid medium with recipe-required properties (drinking water, activated water, water with added extracts of various plants and so on, serum and such) whose use is required by the technological regulations for the purpose of improving the physical properties of the prospective product, for example dough and accordingly to increase the porosity of the grain bread made from this dough, for instance. To increase the biological value of grain it is possible to add to the water medium various nutritional components (nutritional biological additives, salts). In addition, the liquid medium can contain also extracts of medicinal plants in various blends and proportions.

It is preferable to germinate grain with a rate of no more than 1.2 liters of shungite-infused water for 1 kg of grain.

The germination is conducted equally over the entire volume of grain germinated at the temperature of the liquid medium of 10 °C to 38 °C, from 11 h to 38 h, depending on the temperature of the liquid medium with constant air supply while the dependence of the time of germination and liquid medium is inversely proportional, that is the higher is the temperature the faster grain germinates. Approximate dependence of time of grain germination on the liquid medium temperature is presented in chart 1.

Chart 1. Approximate dependence of time of grain germination on the liquid medium temperature

| Liquid medium temperature | Germination time, hours |
|---|---|
| 40 - 35 °C | 11 - 13 |
| 35 - 30 °C | 14 - 18 |
| 30 - 25 °C | 19 - 24 |
| 25 - 20 °C | 25 - 27 |
| 20 - 15 °C | 28 - 32 |
| 15 - 10 °C | 33 - 38 |

Respectively, the time of readiness of germinated grain can be adjusted by means of decreasing or increasing the temperature of the liquid medium.

Grain is germinated until it reaches the humidity according to the kind of grain until saturation of grain and reaching pH 3.6-7 in grain. For various kinds of grain water saturation is different and presented as achieving a certain percentage of humidity of grain's weight as follows:

| |
|---|
| Wheat - 45% |
| Rye - 51-53% |
| Einkorn - 55% |
| Corn - 55% |
| Buckwheat - 50% |
| Oat - 52% |

Germination is understood as biological activation of grain in which the germ is fully activated and a sprout appears on it while the grain is saturated by humidity and swells, a root is starting to form but the intensive process of hydrolysis of starch, endosperm and protein of the aleuronic layer has not yet started, that is the baking properties of grain do not deteriorate to a critical level on which the content of gluten decreases sharply.

At the time of germination the quantity of gluten in grain decreases and at the same time are activated and increase the quantities of enzymes, antioxidants and vitamins. A study showed that in germinated grain the quantity of gluten decreases by 75% off its initial content there.

It is preferable to germinate grain in containers with shungite stones.

After the germination of grain the water in which grain was germinated is drained and grain is rinsed with water at the temperature of 10 to 21 °C to prepare for milling. As water for rinsing germinated grain it is preferable to use shungite-infused water. The infusion of water is conducted as described above for obtaining shungite water for grain germination.

Then grain is ground to particles no larger that 300 µm and milling the germinated grain is conducted with simultaneous supply of cooled air and at the temperature of 22 °C to 35 °C, not exceeding the temperature of denaturation of the protein of the obtained grain mass. Grain is ground to various sizes of particles: from 250 to 300 µm - course milling, to 250 µm - medium milling, to 150 µm - flour milling.

From the obtained grain mass is prepared dough adding additional ingredients depending on the recipe of the end product. In one version of the execution of the invention as natural yeast is added oxidized mass with pH 5.8-62 of the same grain. From the obtained mass is separated a part which is oxidized naturally for 48 h to 72 h at the temperature of 25 °C to 35 °C.

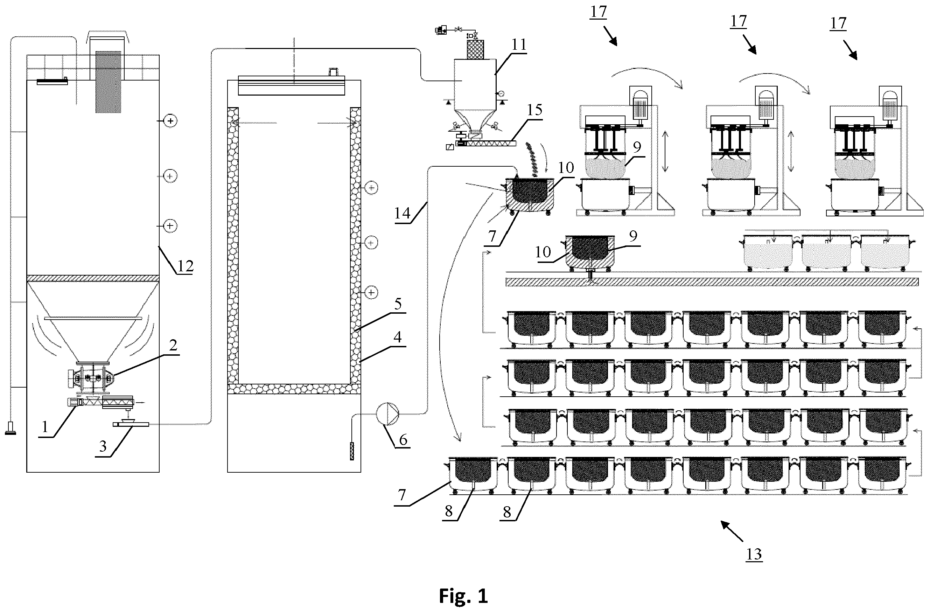

The claimed method of production of grain mass is executed by means of an equipment system for producing grain mass according to the invention comprising a module of superficial grain cleaning (optional), a module of grain germination, a module of grain grinding and loading-unloading devices (figure 1) installed in the line of the technological process.

The superficial grain cleaning module is optional and can be executed as equipment for grain cleaning on an industrial scale 5000 kg/h where grain is rinsed with water with a supply of pressured air in an air tunnel at 90% humidity whereby grain is cleaned of superficial layer. The superficial grain cleaning module can feature a hulling machine 11 for the removal of the germ cover's superficial layer particles without damaging the integrity of the seedcase's hyaline layer and preserving its germ, a device for rinsing grain's surface and a device for cleaning grain off mineral and organic inclusions 1. Equipment for grain cleaning is known from practice, for instance from WO0222268 A1.

The grain germination mode features:
At least one **container for water infusion** 4 on the basis of shungite stones as a liquid medium. This container is equipped by a device of fresh water supply, shungite stones 5, a means of supply of shungite stone structured water in transport containers for grain germination (for example a pump 6 and pipe 14). It is preferable to use shungite stones with carbon content of 35 to 80%. The quantity of shungite stones in a container of 5 to 50% of the water weight. It is possible to use shungite stones in pieces of various sizes. The best results are obtained using shungite stones in pieces preferably sized 1 to 10 cm. It is preferable that the internal walls of the container for water infusion be covered with shungite stones sized 3 to 10 cm. The container has a scale for unloading any quantity of water from 1 to 500 liters. It is preferable that the container is connected to a device supplying fresh purified water through a mechanic filter. The quantity of loaded water in the container for grain germination can be determined automatically.

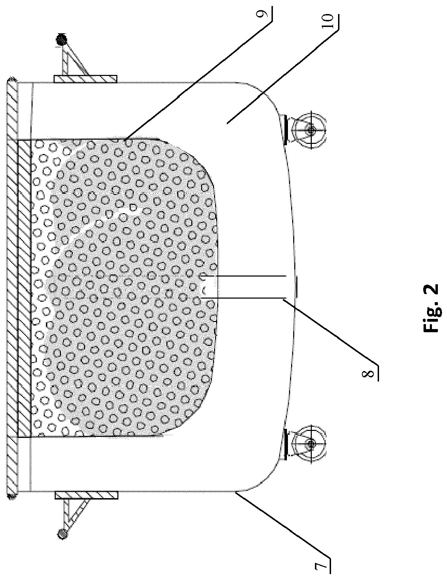

At least one container for portional grain termination 7 as a transport container with wheels with a capacity of 50 to 300 kg of grain. It is preferable that the container for grain germination have four driving wheels. It is preferable be made of stainless steel. The container's bottom has a drainage tap 8 for draining residual water after germination. On the sides can be hands thanks to which this container can be lifted and turned over for unloading. In the sample version shown in figure 2, the transport container 7 features a grid basket 9 with holes, made of stainless still into which grain is loaded. This grid basket is identical to the grinder's basket as described more specifically below. After germination this basket 9 is transferred together with the germinated grain from the transport container to the grinder's container.

The number of containers needed for grain germination 7 is calculated considering the total quantity of the end product produced from the grain mass for a given day (shift) taking into account the requirements of dry grain per unit of the end product. Each transport container 7 is equipped with a device for air supply (not shown in the figure) as a tube connectible to a pressured air source whose lower end is in the container's bottom and the upper end with a device for connection to a pressured air source. This source can be for instance a compressor with a necessary level of pressure of air. The air supply system for the germinating grain can be executed also as removable perforated tube connected with a flexible pipe for pressured air supply installed in the container before loading grain for germination. Such perforated tube can have the form of a horizontal spiral. The perforated tube can have a vertical sleeve which is a connector between the perforated tube and flexible pipe. The flexible pipe for pressured air supply can be one of the exit of the traditional pressured air pumping system which includes a compressor and a central flexible pipe connected to it with the number of exits according to the number of the germination containers. Each exit can be equipped with a nozzle with lateral perforation.

In the preferable version the internal walls of the germination container 7 be covered with nets of shungite rocks 2 to 6 cm wide.

The germination module features also a loading device 15 for loading cleaned grain to the transport germination containers. Preferably this module should include a silo 12 for containing grain with a capacity of, for example, 50 t, equipped by a dosing unit 2, for example a drum feeder, rotary feeder, electronic scale et cetera adjusted for loading a certain amount of grain into the germination containers, for example by a vacuum transporter 3. It is preferable that silo have devices for controlling grain's humidity. In the sample version of the invention execution, shown in figure 1, at the exit of silo 12 is installed grain cleaning module 1.

The grain germination module 1 comprises also an isothermal chamber 13 for grain germination where are located transport containers 7 for grain germination and the chamber is capable of maintaining the temperature in the entire volume of each of the transport containers. The germination containers 7 can be located in one or several rows inside the isothermal chamber 13. Over the first or over each germination container 7, or over a group of such containers are located pipes for air supply connected to a pressured air source and pipes for water supply 14 connected to container 4 or water infusion containers as well as transport sleeve 15 for feeding grain from grain storage silo 12. Isothermal chamber 13 is equipped with equipment for maintaining temperature according to required parameters from 10 °C to 38 °C. For example, air conditioners (not shown in the drawings). Each group of germination containers has a control module for air temperature at a given moment. The data is sent to the central unit of command of temperature in the isothermal chamber which commands the air conditioners located round the isothermal chamber. The isothermal chamber may have rails and/or guideways on which the transport germination containers move and could be connected with each other and make up one or several chains / sequences. In the beginning of a sequence the transport germination containers are loaded with a certain quantity of cleaned grain and shungite water and then the loaded transport containers progress into the isothermal chamber at a speed defined by the required time for grain germination at a required temperature. The movement of the transport containers is achieved by known means, for instance transport paths, belt conveyor or other conveyors.

The isothermal chamber can be of tunnel-type whose length is chosen so that in can contain the number of germination containers as required by the technological process. A tunnel isothermal chamber is known for example from WO0222268 A1. The system also includes loading-unloading devices for reloading germinated grain from the transport containers to the mill. For example, from one side of the isothermal chamber can be located means for lifting and overturning the transport containers for unloading germinated grain to the belt conveyor for feeding germinated grain to the grinding module. In the sample version shown in figure 1 move only grid basket 9 with germinated grain - from transport container 7 to grinder's containers 16.

### Grain grinding module

This module is executed as at least one grain grinder / mill 17. Grain grinder 17 is adjusted to grind germinated grain for achieving fine grain mass with particles sized not more than 300 µm and has means for cold air supply for cooling grain mass in the milling process to the temperature not exceeding that of protein denaturation - 35 °C.

The grinding module can feature several grinders 17 located in a row while each subsequent, in the production line, grinder is adjusted to grind the obtained mass to particles of a smaller size. For example, the first grinder of this sequence grinds to particles sized 750 µm, the second 350 µm and the third 250 µm.

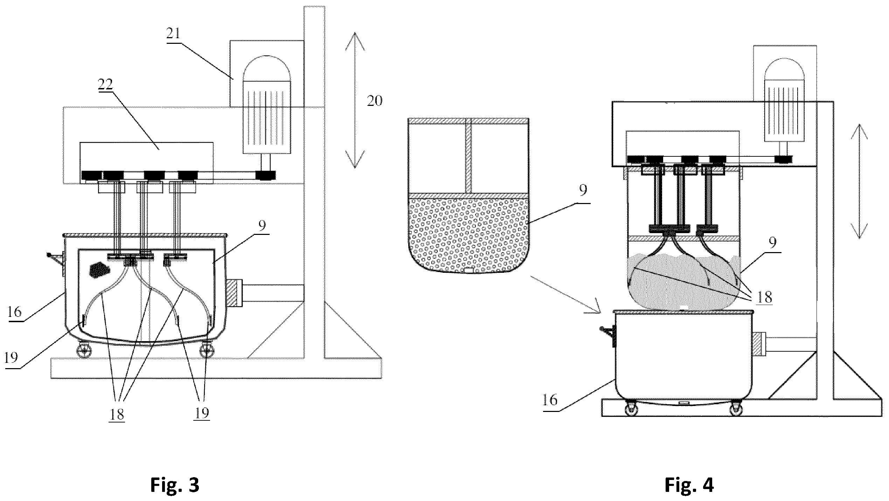

In the sample version of the execution of the system (figures 3 and 4) grinder 17 comprises container 16, grid basket 9 and at least two rotating levers 18 in it ending with scraping knives 19 touching the internal surfaces of grid basket 9. The rotating mechanism can turn, for instance, engine 21, three-dimensional planetary gear box 22 driven by a cog belt. The grinder has lifting means 20 for lowering and lifting grid basket 9 and knives system. Grid basket 9 is preferably made of stainless still, for example in the shape of a sieve and has many holes of determined sizes and cutting edges. As container 16 of the grinder a transport container for dough kneading, a bowel, can be used made of stainless steel. The rotation of levers with the scraping knives leads to the grinding of germinated grain in the grid basket as a result of the scraping effect of knives and holes of the basket. The sized of obtained particles depends on the size of the holes.

The system can also be equipped with loading-unloading devices installed in the places of reloading as required by the technological process.

The system also can include an electronic unit of command of the system's processes and devices. Such electronic command block can be connected with various sensors, for instance sensors of temperature in the isothermal chamber. The grain mass production system operates as follows.

Matured grain with seedcase and undamaged hyaline layer, cleaned and rinsed, is loaded into a transport container for germination and filled with shungite stones infused water as a liquid medium.

The number of containers needed for grain germination is calculated considering the total quantity of the end product produced from the grain mass for a given day (shift) taking into account the requirements of dry grain per unit of the end product. Before loading the cleaned and rinsed grain into the container is installed a perforated tube of the air supply system with a sleeve for subsequent connection to the flexible pipe of pressured air feed from a compressor.

The prepared germination containers are placed in the isothermal chamber.

In the isothermal chamber is maintained equal permanent temperature all over the volume of the germinating grain during a determined time until the required stage of germination. This stage of germination is determined by the aggregate indices of saturation of grain by water.

This stage (state) of germinated grain can be determined by a quick empiric method - pressing a swollen grain by two fingers without special effort when the germinated grain brought to the required condition is easily flattened and the germ pops out together with the white endosperm mass.

For ensuring the germination process the grain mass is regularly fed with air, for instance, by adding air to the germination container by means of the pressured air supply system.

When grain reaches the required stage of germination the surplus liquid medium, if left in the germination container, is drained through the drainage tap.

The germinated grain is then rinsed with cold drinking water off the residues of the acidic liquid medium in which grain was germinated.

Then the germinated grain is reloaded into grain grinding module 3. In our sample we use three grain grinders.

The finished grain mass enters the transport container for the collection of obtained grain mass, for instance into a standard bowel as shown in the sample or to a belt or screw conveyor (not shown in the drawing) for further feeding to the technological place of processing into the end product.

### Example 1

To produce an end product - wheat grain buns in the amount of 340 kg it is required to take 250 kg of cleaned wheat. We load the clean wheat to a transport container with shungite placed on all the internal walls of the container and fill it with shungite-infused water in the quantity of 300 I. Before that the water is infused with shungite in a container with 30 kg of shungite stones for 48 h at the temperature of 32 °C. In the transport container the wheat is germinated with constant air supply from the bottom part of the container at the temperature of 25 °C for 25 h. Upon completing the process of germination the remaining water is drained and germinated grain is rinsed by shungite-infused water with the temperature of 21 °C. The obtained quantity of germinated grain of approximately 360 kg is poured to a conveyor belt where containers are placed and so is transported to the grinding module. From the conveyor container the germinated grain is poured into the loading part of the grinder where a container with a basket is where the orifices are for coarse mill and the germinated grain is ground to the size of 250 µm. During milling we supply cooled air at the temperature of 4 °C to maintain the temperature of the obtained mass within 35 °C. After the milling is complete the mass is moved to the dough production module where are added 2% of salt, herbs (for instance ground cummin 0.5% and oxidized dough with 8.5 pH in the quantity of 10% of the mass's weight. The oxidized dough is obtained from the same math which we leave to oxidize naturally for 72 h at the temperature of 35 °C.

### Example 2

To produce an end product - rye bread in the amount of 365 kg it is required to take 250 kg of cleaned rye. We load the clean rye to a transport container with shungite placed on all the internal walls of the container and fill it with shungite-infused water in the quantity of 300 I. Before that the water is infused with shungite in a container with 30 kg of shungite stones for 72 h at the temperature of 30 °C. In the transport container the rye is germinated with constant air supply from the bottom part of the container at the temperature of 30 °C for 18 h. Upon completing the process of germination the remaining water is drained and germinated grain is rinsed by shungite-infused water with the temperature of 21 °C. The obtained quantity of germinated grain of approximately 385 kg is poured to a conveyor belt where containers are placed and so is transported to the grinding module. From the conveyor container the germinated grain is poured into the loading part of the grinder where a container with a basket is where the orifices are for coarse mill and the germinated grain is ground to the size of 150 µm. During milling we supply cooled air at the temperature of 4 °C to maintain the temperature of the obtained mass within 35 °C. After the milling is complete the mass is moved to the dough production module where are added 2% of salt, herbs (for instance ground cummin 0.5% and oxidized dough with 8.5 pH in the quantity of 10% of the mass's weight. The oxidized dough is obtained from the same math which we leave to oxidize naturally for 72 h at the temperature of 35 °C.

### Example 3

To produce an end product - wheat pasta in the amount of 325 kg it is required to take 250 kg of cleaned wheat. We load the clean wheat to a transport container with shungite placed on all the internal walls of the container and fill it with shungite-infused water in the quantity of 300 I. Before that the water is infused with shungite in a container with 30 kg of shungite stones for 48 h at the temperature of 32 °C. In the transport container the wheat is germinated with constant air supply from the bottom part of the container at the temperature of 25 °C for 25 h. Upon completing the process of germination the remaining water is drained and germinated grain is rinsed by shungite-infused water with the temperature of 21 °C. The obtained quantity of germinated grain of approximately 360 kg is poured to a conveyor belt where containers are placed and so is transported to the grinding module. From the conveyor container the germinated grain is poured into the loading part of the grinder where a container with a basket is where the orifices are for coarse mill and the germinated grain is ground to the size of 150 µm. During milling we supply cooled air at the temperature of 4 °C to maintain the temperature of the obtained mass within 35 °C. After the milling is complete the mass is moved to the dough production module where are added 2% of salt, herbs (for instance ground cummin 0.5% and oxidized dough with 8.5 pH in the quantity of 10% of the mass's weight. The oxidized dough is obtained from the same math which we leave to oxidize naturally for 72 h at the temperature of 35 °C.

The inventions can be used for producing grain mass on an industrial scale from germinated (brought to the initial stage of germination) grain with stable batch-to-batch required properties, with increased nutritional and biological value and high organoleptic indices for end products produced from it such as pastas, bread, including bakery products (hamburger buns, baguettes, bread sticks, pitas, biscuits, dry biscuits, croissants, cookies, pasta and so on).

## Claims

1. A method of producing grain mass involving the germination of cleaned grain and its grinding, while as grain is used matured grain with preserved seedcase and undamaged hyaline layer while the grain germination is conducted in a liquid medium at the temperature of 10 °C to 38 °C based on water from 11 h to 38 h, depending on the temperature of liquid medium with constant air supply until reaching pH 3.6-7 in the grain and after the germination of grain the water in which grain was germinated is drained and grain is rinsed with water at the temperature of 10 to 21 °C to prepare for milling and then grain is ground to particles no larger that 300 µm and milling the germinated grain is conducted with simultaneous supply of cooled air and at the temperature of 22 °C to 35 °C, not exceeding the temperature of denaturation of the protein of the obtained grain mass **characterized in that** as a liquid medium is used water infused on shungite stones for 1 h to 10 days, preferably 24 to 48 hours, and the dependence of the time of grain germination on the temperature of the liquid medium is inversely proportional.

2. A grain mass production method according to claim 1, **characterized in that** grain mass is germinated in containers with shungite stones.

3. A grain mass production method according to claim 1 or 2, **characterized in that** it includes a stage of superficial cleaning of grain passing grain through an air tunnel at 90% humidity.

4. A grain mass production method according to claim 1, **characterized in that** milling is conducted to the size of particles not larger than 250 µm.

5. A grain mass production method according to claim 1, **characterized in that** fine milling is conducted to the size of particles not larger than 150 µm.

6. A grain mass production method according to claim 1, **characterized in that** for germination the grain is placed in shungite-structured water with ratio of no more than 1.2 I for 1 kg of grain.

7. A grain mass production method according to claim 1, **characterized in that** as grain are used grains of wheat, rye, oat, barley, soy, corn or their combinations at the required ratio of components.

8. A grain mass production method according to claim 7, **characterized in that** the germination of grain of various cereals and their milling are conducted separately and the obtainment of grain mass from various cereals at the recipe-required ratio is conducted by blending the grain masses obtained from each cereal.

9. A method of production of dough on the basis of grain mass obtained by the method according to claims 1 to 8, wherein oxidized mass with pH 5.8-6.2 of the same grain is added as natural yeast, wherein the mass is oxidized naturally for 48 h to 72 h at the temperature of 25 °C to 35 °C.

10. A system for the production of grain mass comprising:
- a module for grain germinating featuring:
- loading device (15) for loading cleaned grain into transport containers for germinating grain;
- at least one transport container (7) for portional germinating of grain equipped with means (14) for supplying a liquid water-based medium, draining for used water (8) and a air supply system;
- isothermal chamber (13) for grain germination in which are installed the transport containers (7), the chamber being adapted to maintain the temperature of grain germination from 10 °C to 38 °C over the entire volume of each of the transport containers;
- unloading-loading device for transferring germinated grain from the transport containers to the grinder;
- a grain grinding module comprising at least one grain grinder (17);
**characterized in that** the module for grain germinating features additionally at least one container (4) for water infusion by shungite stones (5) as a liquid medium, equipped with means (6, 14) for supplying shungite stones infused water in the transport containers (7) for grain germination,
wherein the grinder (17) is capable to grind germinated grain to achieve fine grain mass with particles sized no larger than 300 µm and has means for supplying cold air for cooling grain mass in the process of milling to a temperature not exceeding the temperature of protein denaturation.

11. A system for the production of grain mass according to claim 10, **characterized in that** the module for grain germinating comprises two or more grinders (17) arranged in series, wherein each subsequent downstream grinders (17) is adapted to grind the mass to a smaller particle size.

12. A system for the production of grain mass according to claim 10 or 11, **characterized in that** the grinder comprises a container (16), at least one lowerable grid basket (9) and at least two rotating levers (18) arranged in the in grid basket (9) ending with scraping knives (19) touching the internal surfaces of the grid basket (9), a lifting device 20 for lowering and lifting the grid basket (9) and the knives, wherein a rotating mechanism of the levers (18) comprises a motor (21) and a three-dimensional planetary gear box (22) driven by a cog belt.

13. A system for the production of grain mass according to claim 12, **characterized in that** the transport container (7) for the portional germination of grain comprises a grid basket (9) for grain identical with the grid basket (9) of the grinder (17).

14. A system for the production of grain mass according to claim 10, **characterized in that** the internal walls of the transport container (7) for grain germination are covered by cages with shungite stones (10), said cages being from 2 to 6 cm wide.

15. A system for the production of grain mass according to claim 10 **characterized in that** it additionally comprises a module for surface cleaning of the grain (1).
